Europäisches Patentamt

European Patent Office

Office européen des brevets

(19)

(11) Veröffentlichungsnummer: **0 038 910**
**B1**

(12) **EUROPÄISCHE PATENTSCHRIFT**

(45) Veröffentlichungstag der Patentschrift:
**15.02.84**

(21) Anmeldenummer: **81101173.3**

(22) Anmeldetag: **19.02.81**

(51) Int. Cl.³: **B 65 D 51/16, F 16 J 13/02**

54 **Dichtungselement.**

(30) Priorität: **24.04.80 DE 3015775**

(43) Veröffentlichungstag der Anmeldung:
**04.11.81 Patentblatt 81/44**

(45) Bekanntmachung des Hinweises auf die Patenterteilung:
**15.02.84 Patentblatt 84/7**

(84) Benannte Vertragsstaaten:
**AT DE FR GB IT NL**

56 Entgegenhaltungen:
**DE - A - 2 509 258**
**DE - B - 2 403 244**
**DE - C - 435 247**
**FR - A - 1 357 064**
**FR - A - 1 490 177**
**US - A - 3 071 276**
**US - A - 3 971 489**

(73) Patentinhaber: **Continental Gummi-Werke**
**Aktiengesellschaft, Königsworther Platz 1 Postfach 169,**
**D-3000 Hannover 1 (DE)**

(72) Erfinder: **Klar, Rudolf, Telemannstrasse 1,**
**D-3410 Northeim (DE)**
Erfinder: **Beier, Ulrich, Am Hasselberg 46,**
**D-3410 Northeim (DE)**

ACTORUM AG

## Dichtungselement

Die Erfindung bezieht sich auf aus Gummi oder gummiähnlichem Kunststoff hergestellte ringförmige Dichtungselemente zwischen ruhend aufeinanderliegenden starren Flächen.

Ein bevorzugtes, wenn auch keineswegs ausschliessliches Einsatzgebiet der Erfindung liegt in Verschlüssen für Behälter mit zum Gasen neigenden Flüssigkeiten wie beispielsweise für Haushaltsreiniger und auch Transport- und Gebrauchsgefässe für andere Flüssigkeiten und Lösungsmittel niederer Oberflächenspannung und entsprechend erhöhter Verdunstungsgeschwindigkeit. Das notwendige flüssigkeitsdichte Verschliessen der Behälter führt andererseits dazu, dass sich ein unerwünschter Dampfdruck ausbildet, der erst beim späteren Öffnen des Verschlusses sich ausgleichen kann und durch die damit verbundene heftige Strömung Erschwernisse in der Handhabung und je nach der Art der Flüssigkeit mehr oder weniger schwere Gefährdungen des Bedienungspersonals selbst als auch der näheren Umgebung hervorruft. Die in der Praxis häufig als Sicherheitsmassnahme ausgesprochene Empfehlung, den Verschluss nur teilweise zu schliessen, nimmt für den damit gewonnenen Druckausgleich den Verlust vollkommener Flüssigkeitsabdichtung in Kauf und ist wegen der daraus entstehenden Möglichkeiten unabsehbarer Folgeschäden abzulehnen. Das gleiche gilt auch für das Anbringen eigener den Flüssigkeitsverschluss umgehender Entgasungsöffnungen und ähnliche Behelfslösungen.

Der Erfindung liegt demgegenüber die neuartige Gestaltung eines sowohl Flüssigkeitsdichten als auch ausreichend gasdurchlässigen Dichtungselementes zugrunde, um damit in weiterer Folge Behälter für verdunstungsfähige Flüssigkeiten aller Art ohne Rücksicht auf ihre Anordnung und Lage tropfdicht und gleichzeitig ohne die Gefahr einer Überdruckausbildung abschliessen zu können. Diese Aufgabe wird für Dichtungselemente der eingangs geschilderten Gattung gemäss der Erfindung dadurch gelöst, dass sie mit wenigstens einer auf beiden axialen Seiten von einer geschlossenen Gummi- bzw. Kunststoffschicht bedeckten, an ihrem Innen- und ihrem Aussenumfang dagegen freiliegenden Einlage aus im wesentlichen quer zur Abdichtungsrichtung verlaufenden textilen Fasern versehen werden, wobei die Einlagen in Form eines Vlieses oder Filzstreifens aus in Wirrlage untereinander verschlungenen oder verklebten Fasern oder aber in einer bevorzugten Ausführungsform der Erfindung aus in Kreuzbindung untereinander verketteten Fäden hergestellt sein können. Von wesentlicher Bedeutung ist in jedem Falle die freie Zugänglichkeit der Einlagenfasern an der inneren wie auch der äusseren Umfangskante des elastomeren Schichtkörpers, zu welchem Zweck das Dichtungselement gemäss einem wichtigen Teilmerkmal der Erfindung mit spangebenden mechanischen Mitteln, beispielsweise durch Stanzen oder einen ähnlichen Bearbeitungsvorgang hergestellte Umfangskanten aufweist.

Flüssigkeitsdichte und gleichzeitig gasdurchlässige Verschlussstopfen sind an sich zwar bekannt, und nach einem älteren Vorschlag (französiche Patentschrift 1 490 177) wird dazu auch schon die durch Einlagern von Fasern in Schichtkörpern hervorgerufene Porosität genützt. Der Aufbau der bekannten Stopfen aus untereinander verklebten Scheiben, vorwiegend aus Pappe, Papier und Kunststoffolien, weist ihnen aber von vornherein begrenzte Einsatzmöglichkeiten zu, und in jedem Falle besteht die Notwendigkeit, den Entgasungs- bzw. Belüftungsweg über durchgehende Lochungen in der dem Behälterinnern zugekehrten nichtdurchlässigen Auflageschicht offenzuhalten. Die Erfindung schafft demgegenüber ein besonders für Behälterverschraubungen, allgemein aber auch für andere Verschlüsse und Absperrvorrichtungen jeder Art geeignetes Dichtungselement, das neben seiner auf der elastomeren Komponente beruhenden zuverlässigen Dichtwirkung gegenüber der abgeschlossenen Flüssigkeit einen diese gleichsam umgehenden und in Querrichtung dazu verlaufenden, ausschliesslich gasförmigen Stoffen zugänglichen Diffusionsweg offenhält. Das Ausmass der Diffusion kann dabei durch die Wahl der eingebetteten Fasern nach Provenienz und Titer, ihre gegenseitige Anordnung und Zwischenverbindung und den Aufbau der Einlage im gesamten genau definiert und den jeweils vorherrschenden, in erster Linie von den Eigenheiten der verwendeten Flüssigkeit diktierten Bedürfnissen angepasst werden. Andererseits hat der die Faserschicht bedeckende elastomere Werkstoff auf diesen Wirkungsmechanismus keinen Einfluss, so dass er freizügig und ohne Zwang zu Kompromissen aus der Vielfalt verfügbarer Mischung natürlicher und synthetischer Kautschuke oder gummiähnlicher anderer Kunststoffe ausgesucht werden kann. Die Erfindung bietet damit zugleich auch weitreichende Möglichkeiten zu einer kostengünstigen Fertigung.

Die Diffusion innerhalb der neuartigen Dichtungselemente ist an keine bestimmte Richtung gebunden, sondern sie kann sowohl von innen nach aussen als auch von aussen nach innen verlaufen. Neben ihrer speziellen Anwendung auf gasende Flüssigkeiten schliesst die Erfindung daher allgemein jeden Fall in Verbindung mit einer Gasoder Dampfdurchleitung ein, so beispielsweise den Druckausgleich für Behälter mit heiss abgepacktem Füllgut, das mit zunehmendem Erkalten das Einwandern atmosphärischer Luft in Gang setzt.

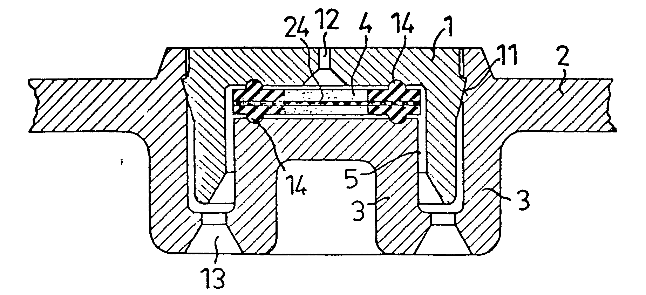

Die Erfindung ist anhand der schematischen Darstellung eines Ausführungsbeispiels in der Zeichnung verdeutlicht. Die Zeichnung zeigt im Mittellängsschnitt ein neuartiges Dichtungselement in eine Verschlusskappe für Haushaltsreiniger eingebaut.

Die gezeichnete Verschlusskappe befindet sich an der Entgasungspatrone des Reinigers. Sie enthält als beweglichen Teil eine Hülse 1, die mit Presssitz in einen mit der Behälterwandung 2 zusammenhängenden Dichtnapf 3 eingepasst ist. Anstelle der mit einer Ringschulter 11 angedeuteten formschlüssigen Verriegèlung könnte für die Hülse auch eine Schraubverbindung vorgesehen sein. Die einander zugekehrten Stirnflächen der Hülse 1 und des Dichtnapfes 3 bilden die gegeneinander abzudichtenden Flächen, zwischen die das erfindungsgemässe Dichtungselement 4 als den Strömungsweg von mehreren am Innenumfang des Dichtnapfes 3 vorgesehenen Bohrungen 13 nach einer Entgasungsbohrung 12 in der Hülse 1 unterbrechendes Absperrglied eingesetzt ist.

Das Dichtungselement 4 ist in Form einer Ringscheibe mit beiderseits konzentrisch und gleichachsig zueinander angeformten wulstartigen Ringrippen 14 aus zwei eine Gewebeeinlage 24 einschliessenden und lückenlos bedeckenden Gummischichten aufgebaut. Die beispielsweise aus Chemiefasern mit Kreuzbindung der Fäden untereinander hergestellte Gewebeeinlage 24 ist durch einen Stanzvorgang am Innen- wie auch am Aussenumfang des Dichtungselementes freigelegt und daher dem Zutritt einerseits des Behälterinhalts und andererseits der Aussenatmosphäre frei zugänglich. Um die damit gebotenen Möglichkeiten voll auszuschöpfen, schliesst der das Dichtungselement 4 übergreifende zylindrische Innenteil der Hülse 1 mit dem zugeordneten Abschnitt des Dichtnapfes 3 einen auch das Dichtungselement im Einbauzustand umgebenden Ringspalt 5 als Teilabschnitt des inneren Strömungsweges ein. Die Ringrippen 14 werden in gleichartig geformten Nuten in den Gegenflächen der Verschlussteile aufgenommen, so dass das Dichtungselement ohne die Notwendigkeit starker, die erwünschte Diffusion möglicherweise beeinträchtigender Pressung formschlüssig gehalten und gegen seitliches Verschieben gesichert ist.

## Patentansprüche

1. Aus Gummi oder gummiähnlichem Kunststoff hergestelltes ringförmiges Dichtungselement (4) zwischen ruhend aufeinanderliegenden starren Flächen, dadurch gekennzeichnet, dass es mit wenigstens einer auf beiden axialen Seiten von einer geschlossenen Gummi- oder Kunststoffschicht bedeckten, an seinem Innen- und seinem Aussenumfang dagegen freiliegenden Einlage (24) aus im wesentlichen quer zur Abdichtungsrichtung verlaufenden textilen Fasern versehen ist.

2. Dichtungselement nach Anspruch 1, dadurch gekennzeichnet, dass es mit spangebenden mechanischen Mitteln, z.B. durch Stanzen hergestellte Umfangskanten aufweist.

3. Dichtungselement nach den Ansprüchen 1 und 2, dadurch gekennzeichnet, dass die Einlage (24) aus in Wirrlage untereinander verschlungenen oder verklebten Fasern hergestellt ist.

4. Dichtungselement nach den Ansprüchen 1 und 2, dadurch gekennzeichnet, dass die Einlage (24) aus in Kreuzbindung untereinander verketteten Fäden hergestellt ist.

5. Dichtungselement nach den Ansprüchen 1 bis 4, dadurch gekennzeichnet, dass es als flache Ringscheibe mit auf einer oder auf beiden axialen Seiten mit Abstand von seinen Umfangskanten angeformten Ringrippen (14) ausgebildet ist.

6. Verschluss mit einem Dichtungselement nach den Ansprüchen 1 bis 5, dadurch gekennzeichnet, dass das Dichtungselement (4) im Einbauzustand mit einen Durchgang zwischen den starren Flächen von dem abgedichteten Raum z.B. zur freien Atmosphäre sperrenden Umfangskanten gehalten ist.

7. Verschluss nach Anspruch 6, dadurch gekennzeichnet, dass die Umfangskanten des Dichtungselementes (4) zumindest über grössere Bogenabschnitte mit Abstand (Ringspalt 5) von mit den starren Flächen zusammenhängenden Verschlussteilen gehalten sind.

## Claims

1. Annular sealing elements (4) made of rubber or a rubber-like plastics material and disposed between rigid faces lying above one another in stationary manner, characterised in that it is provided with at least one insert member (24) made of textile fibres which extend approximately transversely to the sealing direction, said insert member being completely covered on both sides by a layer of rubber or plastics material, but being exposed at its inner and outer circumferences.

2. Sealing element according to claim 1, characterised in that it has circumferential edges formed by chip-producing, mechanical means, for example, by punching devices.

3. Sealing element according to claims 1 and 2, characterised in that the insert member (24) is made from fibres irregularly intertwined or coalesced with one another.

4. Sealing element according to claims 1 and 2, characterised in that the insert member (24) is made from filaments interlinked with one another in crosswise manner.

5. Sealing element according to claims 1 to 4, characterised in that it is in the form of a flat annular disc having annular ribs (14) integrally moulded on one or both axial sides spaced from its circumferential edges.

6. Closure having a sealing element according to claims 1 to 5, characterised in that the sealing element (4) is retained in its mounted position by circumferential edges which block a passage between the rigid faces from the sealed area, for example to the free atmosphere.

7. Closure according to claim 6, characterised in that the circumferential edges of the sealing element (4), at least over relatively large arcuate sections, are kept spaced (annular gap 5) from closure members which are continuous with the rigid faces.

## Revendications

1. Elément d'étanchéité (4) annulaire, réalisé en caoutchouc ou matière plastique caoutchoutique, disposé entre des surfaces rigides superposées statiquement et caractérisé en ce qu'il comprend au moins une insertion (24) constituée par des fibres textiles sensiblement perpendiculaires au sens d'étanchéité, recouverte sur ses deux faces axiales d'une couche fermée de caoutchouc ou de matière plastique, mais dont les bords intérieur et extérieur sont dégagés.

2. Elément d'étanchéité selon la revendication 1, caractérisé par des bords produits à l'aide de moyens mécaniques avec enlèvement de matière, par découpage par exemple.

3. Elément d'étanchéité selon les revendications 1 et 2, caractérisé en ce que l'insertion (24) est produite par des fibres entrelacées ou collées en structure aléatoire.

4. Elément d'étanchéité selon les revendications 1 et 2, caractérisé en ce que l'insertion (24) est constituée par des filaments tissés en armure croisés.

5. Elément d'étanchéité selon les revendications 1 à 4, caractérisé en ce que le disque plat est réalisé avec des nervures annulaires (14) formées sur une des deux faces axiales ou sur les deux, à distance de ses bords.

6. Bouchon avec un élément d'étanchéité selon les revendications 1 à 5, caractérisé en ce que l'élément d'étanchéité (4) est maintenu après montage avec un passage entre les faces rigides des bords isolant le volume étanche de l'atmosphère extérieure par exemple.

7. Bouchon selon la revendication 6, caractérisé en ce que les bords de l'élément d'étanchéité (4) sont maintenus, au moins sur de grands secteurs angulaires, à distance (interstice annulaire 5) des parties du bouchon en liaison avec les faces rigides.